(19) Europäisches Patentamt / European Patent Office / Office européen des brevets

(11) **EP 2 251 712 A2**

(12) **EUROPEAN PATENT APPLICATION**

(43) Date of publication:
**17.11.2010 Bulletin 2010/46**

(51) Int Cl.:
*G01S 13/75* (2006.01)       *H04Q 9/00* (2006.01)
*G08C 17/02* (2006.01)       *G01N 27/00* (2006.01)

(21) Application number: **10174948.9**

(22) Date of filing: **16.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **14.02.2008 GB 0802727**

(62) Document number(s) of the earlier application(s) in accordance with Art. 76 EPC:
**09709815.6 / 2 243 041**

(71) Applicant: **Isis Innovation Ltd**
**Oxford, Oxfordshire OX2 7SG (GB)**

(72) Inventors:
• **Burd, Harvey John**
**Oxford Oxfordshire OX3 0PS (GB)**
• **Stevens, Christopher John**
**Oxford Oxfordshire OX4 2QD (GB)**
• **Edwards, David John**
**Oxford Oxfordshire OX7 5BQ (GB)**
• **Hao, Tong**
**Oxford Oxfordshire OX1 3DR (GB)**

(74) Representative: **Benson, Christopher**
**Harrison Goddard Foote**
**Fountain Precinct**
**Balm Green**
**Sheffield, South Yorkshire S1 2JA (GB)**

Remarks:
This application was filed on 01-09-2010 as a divisional application to the application mentioned under INID code 62.

(54) **Wireless Backscatter Interrogation of a Passive, Resonant Sensor-LC-Tag and a Reference-Tag**

(57)    A sensor comprising: a sensor resonant radar reflector member; and a sensor element, the sensor reflector member being configured to resonate at a resonant frequency when irradiated by radio frequency radiation of a corresponding frequency, the sensor being further configured whereby exposure of the sensor element to a target measurand causes a change in the resonant frequency of the sensor reflector member.

FIG. 5

EP 2 251 712 A2

## Description

FIELD OF THE INVENTION

The present invention relates to sensors for sensing a target measurand. In particular but not exclusively the invention relates to sensors that may be interrogated remotely to determine whether a target measurand has been detected.

BACKGROUND

It is known to provide remote monitoring stations equipped with one or more sensors for measuring one or more parameters of an environment such as moisture content, the presence of one or more prescribed gases such as carbon monoxide, ammonia, chlorine, silane, and other target measurands.

A disadvantage of known monitoring stations is that a power source is generally required in order to relay information from the station to a controller. A power source is also typically required by the one or more sensors in order for the sensors to function.

Providing a power source can be problematic, particularly if it is required to site a monitoring station below ground. Monitoring stations can also be costly to manufacture and maintain.

STATEMENTS OF THE INVENTION

In a first aspect of the present invention there is provided a sensor comprising: a sensor resonant radar reflector member; and a sensor element, the sensor reflector member being configured to resonate at a resonant frequency when irradiated by radio frequency radiation of a corresponding frequency, the sensor being further configured whereby exposure of the sensor element to a target measurand causes a change in the resonant frequency of the sensor reflector member.

Such a sensor has the advantage over known sensors that it does nor require a power source. Furthermore, the sensor can be interrogated remotely by interrogation apparatus without a requirement for a physical link between the sensor and interrogation apparatus.

Preferably the sensor reflector member has an axis of electric polarisation and an axis of magnetic polarisation. The sensor reflector member may have more than one axis of electric polarisation and/or more than one axis of magnetic polarisation.

Preferably the sensor element and the sensor reflector member are separate, but linked such that a change in the physical, chemical or electrical properties of the sensor element due to the presence or effect of the target measurand causes a change in the resonant frequency of the sensor reflector member.

The sensor element may comprise a capacitive element coupled to the sensor reflector member, the sensor being configured whereby a value of a capacitance of the capacitive element is changed when the sensor is exposed to the target measurand.

The sensor element may comprise an inductive element coupled to the sensor reflector member, the sensor being configured whereby a value of an inductance of the inductive element is changed when the sensor is exposed to the target measurand.

The sensor element may comprise a resistive element coupled to the sensor reflector member, the sensor being configured whereby a value of a resistance of the resistive element is changed when the sensor is exposed to the target measurand.

The sensor element may comprise a sensor material configured whereby a value of a physical, chemical or electrical property of the sensor material is changed from a first value to a second value upon exposure of the sensor to the target measured thereby to change the resonant frequency of the sensor reflector member.

The sensor material may be provided in juxtaposition with the sensor reflector member.

The sensor material may be provided in juxtaposition with the capacitive element of the sensor element, the sensor being configured whereby a value of a capacitance of the capacitive element is changed when said physical, chemical or electrical property of the sensor material is changed.

The sensor material may comprise at least one selected from amongst a metallic material, a dielectric material, a non-linear dielectric material, a ferromagnetic material, a hygroscopic material such as a silica gel, a salt such as NaCl, a chemically sensitive resin with variable dielectric and conductive properties, a ferroelectric material, lithium niobate, yttrium-iron-garnet (YIG) and a chemically triggered conducting polymer.

A layer of an electrically insulating medium may be provided between the sensor material and the sensor reflector member.

This feature has the advantage that in some embodiments an electrical flowpath between portions of the reflector member through the sensor material may be substantially prevented.

The sensor reflector member may comprise the sensor material. Thus, the sensor reflector member may comprise the sensor element. In other words the sensor element may be provided by the sensor reflector member.

For example, in some embodiments a conductive portion of the reflector member such as a portion forming an omega resonator or other resonator of an embodiment of the invention, or a portion thereof, may be provided by the sensor material.

The sensor material may comprise a metallic material, preferably copper.

The sensor material may be arranged whereby said value of the physical, chemical or electrical property of the sensor material changes from the second value to substantially the first value in the absence of the target measurand following exposure of the sensor material to the target measurand.

This has the advantage that in some embodiments of the invention a reversible sensor can be formed, i.e. a sensor that can be used multiple times without requiring replacement.

This feature also has the advantage that interrogation apparatus can determine when a target measurand is no longer present. Thus, for example, in the case of a gas sensor arranged to detect a toxic gas the sensor can determine when it might be safe for personnel to return to a building following an evacuation.

The sensor material may be arranged whereby said value of the physical, chemical or electrical property of the sensor material does not change from the second value to substantially the first value in the absence of the target measurand following exposure of the sensor material to the target measurand.

This has the advantage that interrogation apparatus can determine whether a sensor has been exposed to the target measurand even if the target measurand is no longer present. Thus, a 'one-shot' sensor is provided.

In some embodiments, the value of the physical property of the sensor material may be changed from the second value to the first value by separate means, for example by heating, cleaning, or other processing.

Preferably said physical, chemical or electrical property is at least one selected from amongst an electric permittivity, a magnetic permeability, an electrical conductivity, a capacitance and an inductance.

The sensor element may comprise a transducer element configured to generate an electrical current in response to exposure of the sensor element to the target measurand.

The transducer element may be coupled to a varactor element of the sensor element wherein a value of a capacitance of the varactor element is a function of the electrical current generated by the transducer.

The varactor element may be coupled in parallel with the capacitive element of the sensor element.

The transducer element may comprise at least one selected from amongst an electrogalvanic cell, a photodetector and an ionizing radiation detector.

Preferably the transducer element does not require a power source. In other words, the transducer element does not require power from a battery or cable. Rather, an electrical current or an electric potential is generated by an interaction of the target measurand with the transducer element.

Preferably, the sensor element comprises at least one selected from amongst a Hall element and a giant magnetoresistance (GMR) element arranged whereby an electrical conductivity of the sensor element is dependent on a magnitude of a magnetic field applied to the sensor element.

The sensor element may be electrically coupled to the sensor reflector member.

The sensor material may comprise a ferromagnetic material, the sensor reflector member having an inductance, the ferromagnetic material being arranged to change an inductance of the sensor reflector member when the sensor material is exposed to a magnetic field.

The sensor material may comprise a nonlinear dielectric material, preferably a ferroelectric material.

The sensor member may have a portion responsive to an electric field applied parallel to an electric polarisation axis of the sensor member and a portion responsive to a magnetic field applied parallel to a magnetic polarisation axis of the sensor member. The portion responsive to an electric field may comprise a dipole portion. The portion responsive to a magnetic field may comprise a loop portion.

Preferably the sensor reflector member has a dipole portion polarised generally parallel to a polarisation axis of the dipole portion, the polarisation axis being generally parallel to a longitudinal axis of the dipole portion, and a loop portion.

The loop portion may form a loop around the ferromagnetic material.

The dipole portion may be in the form of a generally linear conductive element. The dipole portion may be in the form of a generally straight conductive element.

Alternatively the dipole portion may be in the form of a generally tapered conductive element.

Preferably the sensor reflector member has two dipole portions and the loop portion has a pair of free ends, the dipole portions being coupled to the free ends of the loop portion.

Preferably the sensor further comprises a reference reflector member in addition to said sensor reflector member.

The reference reflector member may be configured whereby exposure of the sensor to a target measurand does not cause a change in a resonant frequency of the reference reflector member. The reference reflector member may be configured whereby exposure of the sensor to a target measurand causes a change in a resonant frequency of the reference reflector member.

The reference reflector member may comprise a conductive member embedded in an electrically insulating medium.

The sensor reflector member and the reference reflector member may be arranged to resonate at substantially the same frequency prior to exposure of the sensor reflector member to the target measurand.

Alternatively, the sensor reflector member and the reference reflector member may be arranged to resonate at different respective frequencies prior to exposure of the sensor reflector member to the target measurand.

Preferably a reference reflector member and a sensor reflector member are arranged whereby an axis of polarisation of the reference reflector member and an axis of polarisation of the sensor reflector member are generally parallel to one another.

The axis of polarisation of the sensor reflector member and of the reference reflector member may be an axis of magnetic polarisation or an axis of electric polarisation. In some embodiments the sensor reflector member and the reference reflector member have corresponding axes of electric polarisation that are parallel to one another and corresponding axes of magnetic polarisation that are parallel to one another.

In some embodiments the sensor reflector member and the reference reflector member are arranged such that the corresponding axes of electric polarisation are substantially non-parallel and/or the corresponding axes of magnetic polarisation are substantially non-parallel.

In some embodiments the sensor reflector member and the reference reflector member are arranged such that the corresponding axes of electric polarisation are substantially orthogonal and/or the corresponding axes of magnetic polarisation are substantially orthogonal.

In some embodiments of the invention the reference reflector member and the sensor reflector member are arranged whereby corresponding axes of electric polarisation of the reference reflector member and sensor reflector member are substantially parallel to one another and corresponding axes of magnetic polarisation of the reference reflector member and sensor reflector member are substantially orthogonal to one another or corresponding axes of electric polarisation of the reference reflector member and sensor reflector member are substantially orthogonal to one another and corresponding axes of magnetic polarisation of the reference reflector member and sensor reflector member are substantially parallel to one another.

In a second aspect of the invention there is provided a method of detecting the presence of a target measurand comprising: providing a sensor comprising: a sensor resonant radar reflector member; and a sensor element, the sensor reflector member being configured to resonate at a resonant frequency when irradiated by radio frequency radiation of a corresponding frequency, the sensor being further configured whereby exposure of the sensor element to a target measurand causes a change in the resonant frequency of the sensor reflector member; irradiating the sensor with RF radiation including radiation of a frequency corresponding to the resonant frequency of the sensor reflector member; and detecting radiation reflected by the sensor.

Preferably the sensor comprises a reference resonant radar reflector member in addition to said sensor reflector member, wherein the reference reflector member is configured whereby exposure of the sensor to a target measurand does not cause a change in a resonant frequency of the reference reflector member, the method comprising the step of measuring a difference between a resonant frequency of the sensor reflector member and a resonant frequency of the reference reflector member thereby to detect a change in resonant frequency of the sensor reflector member in the presence of a target measurand.

A sensor may be arranged to stop resonating when exposed to a target measurand. The sensor may be arranged to recommence resonating when no longer exposed to the target measurant. Alternatively the sensor may be arranged not to resonate again following exposure to the target measurand even in the absence of the target measurand.

BRIEF DESCRIPTION OF THE DRAWINGS

Embodiments of the invention will now be described with reference to the accompanying drawings in which:

FIGURE 1 shows a sensor member according to an embodiment of the invention having a conductive portion formed on a substrate;

FIGURE 2 shows a sensor member according to an embodiment of the invention having a notch formed in a portion of the substrate between interlink elements;

FIGURE 3 shows a sensor member according to an embodiment of the invention having an amount of a sensor material provided thereon;

FIGURE 4 shows a sensor member according to an embodiment of the invention coupled to a varactor and a galvanic cell;

FIGURE 5 shows interrogation apparatus according to an embodiment of the invention irradiating a sensor member buried underground;

FIGURE 6 shows a reference member according to an embodiment of the invention;

FIGURE 7 shows a sensor member according to an embodiment of the invention having interdigitated interlink elements;

FIGURE 8 shows sensor members according to some embodiments of the invention;

FIGURE 9 shows sensor members according to some embodiments of the invention having dipole elements;

FIGURE 10 shows values of resonant frequency and mean radar cross section for resonators according to some embodiments of the invention;

FIGURE 11 shows a plot of reflected intensity as a function of frequency and time delay obtained by interrogation apparatus according to some embodiments of the invention;

FIGURE 12 shows an embodiment having a ferromagnetic element within a loop portion of a reflector member; and

FIGURE 13 shows an embodiment having a sensor element arranged to couple together two portions of a dipole element of a reflector member.

DETAILED DESCRIPTION

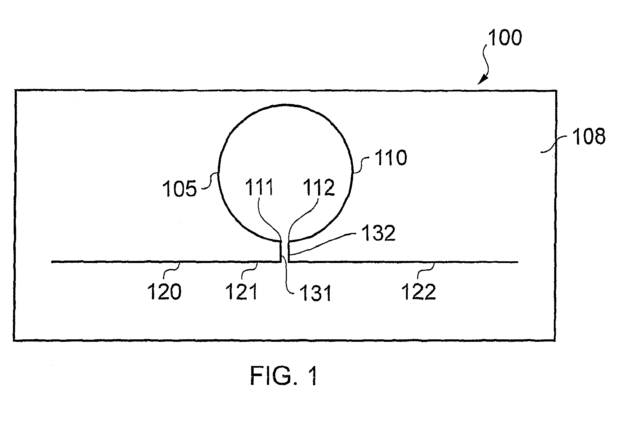

FIG. 1 shows a sensor resonant radar reflector member 100 according to an embodiment of the invention. The sensor member 100 has a conductive portion 105 provided on a substrate 108. The conductive portion 105 comprises a loop portion 110 and a dipole portion 120. The dipole portion 120 comprises two generally straight, colinear conductive dipole elements 121, 122 coupled to opposed ends of the loop portion 110.

The loop portion 110 is arranged to respond to a magnetic field, whilst the dipole portion 120 is arranged to respond to an electric field.

The conductive portion 105 is provided with a pair of generally parallel conductive interlink elements 131, 132 to couple respective opposed ends 111, 112 of the loop portion 110 to an end of each of the dipole elements 121, 122.

In some embodiments the conductive portion 105 is formed from a metallic material such as copper, aluminium, iron, steel, or any other suitable material. In some embodiments the conductive portion 105 is formed from a conducting polymer material.

In some embodiments the substrate is formed from an insulating material such as a plastics material. Other materials are also useful, including conventional printed circuit board substrate materials, glass reinforced plastics (GRP) materials, glass, oxide crystals including ferroelectric and ferromagnetic materials and a variety of other materials. Metallic materials are also useful.

In some embodiments the substrate is formed from a polymer material and the conductive portion 105 is formed from a conducting polymer. In some embodiments the substrate is formed from a polymer material and the conductive portion 105 is formed from polymer impregnated with carbon.

In some embodiments the conductive portion is formed directly on or applied to a surface of an article such as a surface of a utility pipe, a vehicle, an aircraft, a watercraft, or any other suitable article. In the case that it is required to provide a sensor member 100 on a conductive surface, the sensor member 100 may be provided with an insulating medium on one side. The sensor member 110 may be arranged to be secured to an article by means of an adhesive or any other suitable means.

It is to be understood that the configuration of the sensor member 100 is such that the loop portion 110 provides an inductive component of an impedance of the sensor member 100, whilst the interlink elements 131, 132 provide a capacitive component of the impedance of the sensor member 100. A resistive component of an impedance of the sensor member 100 is provided by an electrical resistance of a material from which the sensor member 100 is formed.

Thus, in the embodiment of FIG. 1 the sensor member 100 constitutes a resonator having inductance, capacitance and resistance.

In some embodiments of the invention, the sensor member 100 is configured to be used to measure a strain induced in an article. In some embodiments a sensor member 100 is secured to the article such that application of a strain to the article causes relative displacement of interlink elements 131, 132 such that a distance between elements 131, 132 is changed.

In some embodiments, a change in the distance between elements 131, 132 causes a change in capacitance of the capacitive element formed by elements 131, 132, resulting in a change in resonant frequency of the sensor member 100.

This feature can also be exploited to provide a temperature sensor. For example, the sensor member 100 may be applied to an article that experiences a sufficiently large change in a dimension over the temperature range of interest to enable detection of a change in resonant frequency of the sensor member 100 due to relative displacement of interlink elements 131,132. In some embodiments a sensor member 100 is coupled to a bimetallic strip member, being a member having two metals of different respective coefficients of thermal expansion. A change in temperature of the bimetallic strip member causes bending of the strip member.

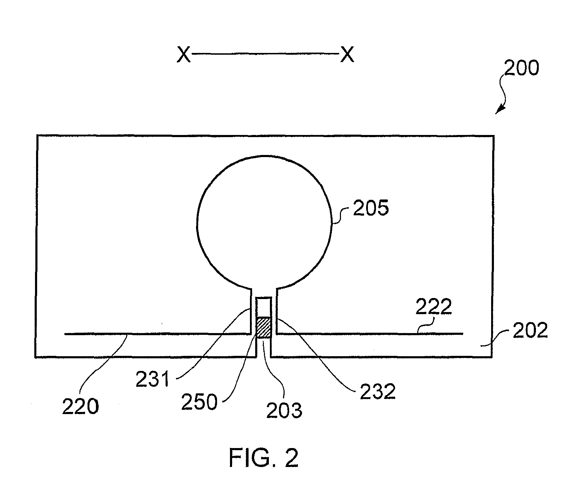

In one embodiment of the invention (FIG. 2) a sensor member 200 is provided similar to that of the embodiment of FIG. 1 except that a notch 203 is formed in the substrate 202 between interlink elements 231, 232. An expander member 250 is provided within the notch 203. The expander member 250 is arranged to expand or contract along a direction parallel to line X-X when a temperature of the expander member 250 is changed. Upon expansion, the expander member 250 is arranged to apply a pressure to walls of the substrate 202 defining the notch 203 thereby to cause a distance between interlink elements 231, 232 to change thereby changing a value of capacitance of a capacitive element provided by elements 231, 232.

In some embodiments of the invention the sensor member is configured whereby a target measurand such as a predetermined chemical compound, element, ion, can approach the sensor member sufficiently closely to cause a change in resonant frequency of the sensor member due to the presence of the target measurand itself. In some embodiments the measurand is a liquid such as water an oil or any other liquid, or a gas such as oxygen, cyanide, silane, or any other gas.

In the case of the embodiment of FIG. 1, the sensor member 100 is arranged whereby in the absence of the target measurand the conductive portion 105 is exposed to an environment sufficiently different from the target measurand that a change in resonant frequency of the sensor member 100 is observed when the sensor member 100 is exposed to the target measurand.

For example, in some embodiments the conductive portion 105 of the sensor member 100 is provided with a thin layer of an electrical insulator medium thereby to prevent direct contact between a target measurand and the conductive portion 105. The sensor member is arranged whereby upon exposure of the sensor member 100 to water, a change in capacitance of the capacitive element formed by the interlink elements 131, 132 occurs, resulting in a detectable change in resonant frequency of the sensor member 100. In some embodiments the presence of the thin layer of insulator medium is arranged to prevent deterioration of the conductive portion 105 in the presence of the target measurand and one or more other constituents of an ambient environment to which the sensor member 100 is exposed. In some embodiments the presence of the thin layer of insulator medium limits prevents an electric flowpath being established between the interlink elements 131, 132 through the target measurand (such as water) and/or ambient atmosphere. Other liquids may also be detected in addition to or instead of water.

In some embodiments of the invention the conductive portion 105 is not insulated from the target measurand. Thus, in the case of exposure of the sensor member 100 to a conductive liquid (such as groundwater) a change in electrical resistance between interlink elements 131, 132 occurs instead of or in addition to a change in capacitance of the capacitive element formed by interlink elements 131, 132. The change in electrical resistance is due to the provision by the target measurand of a current flow path between the interlink elements 131, 132. This also results in a detectable change in a resonant frequency of the sensor member 100.

In some embodiments the sensor member 100 is arranged whereby the presence of the target measurand causes a change in an electrical property of the conductive portion 105 itself, thereby causing a change in resonant frequency of the sensor member 100.

Thus, in some embodiments the conductive portion 105 is formed from a metallic material susceptible to reaction with the target measurand. For example, the metallic material may comprise copper and the target measurand may comprise water or a more corrosive medium such as hydrogen chloride, or any other suitable corrosive medium.

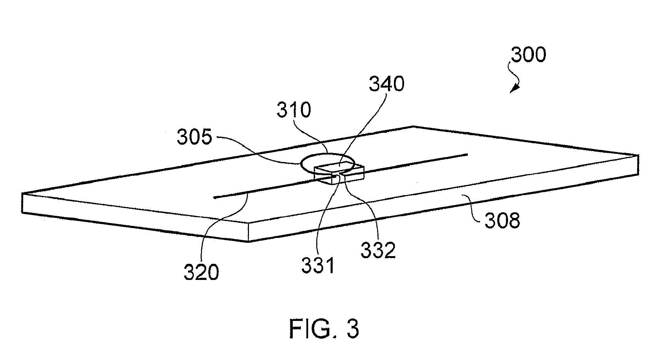

FIG. 3 shows an embodiment in which a sensor member 300 substantially as described with respect to the embodiment of FIG. 1 is provided with a quantity of a sensor material 340 at a location substantially in juxtaposition with interlink elements 331, 332. The sensor material 340 is of a type configured whereby a change in a dielectric property of the material occurs upon exposure to a target measurand. In some embodiments the sensor material is provided in one or more other locations in addition to or instead of in juxtaposition with elements 331, 332.

The sensor material 340 may comprise one or more of a variety of materials including but not limited to chemically sensitive resins with variable dielectric and conductive properties, ferroelectric materials for electric field sensing (e.g lithium niobate) ferromagnetic materials for magnetic field sensing (e.g. yttrium-iron-garnet, YIG), hygroscopic materials (e.g NaCl, silica gel), and chemically triggered conducting polymers.

In some embodiments the sensor material 340 is configured whereby a change in electrical conductivity instead of or in addition to a change in dielectric constant occurs upon exposure of the sensor material 340 to a target measurand.

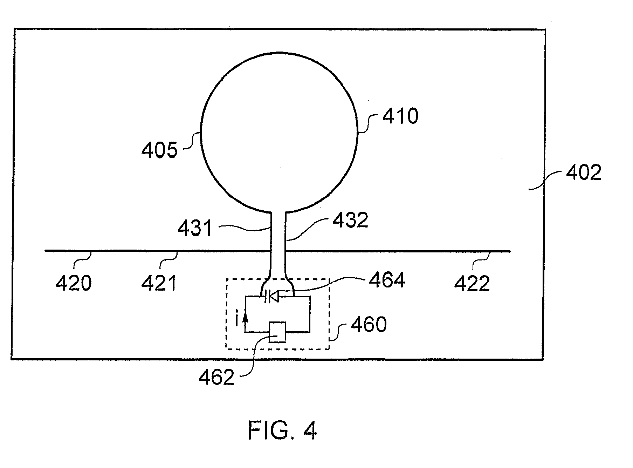

FIG. 4 shows an embodiment of the invention in which a detection member 460 is provided, the detection member 460 being configured to generate an electrical current in response to detection by the detection member 460 of a target measurand. In some embodiments the detection member 460 has an electrogalvanic cell 462 arranged to generate an electrical current in response to the presence of a gas such as oxygen. In some embodiments the detection member 460 has a photodiode or an ionising radiation detector instead of or in addition to the electrogalvanic cell 462. In some embodiments the detection member has a fast ion conductor arranged whereby ion mobility through the conductor increases in the presence of ionising radiation. In some embodiments the detection member has an onboard power supply such as a battery element.

In the embodiment of FIG. 4 the detection member 460 is arranged whereby an electrical current i generated by an electrogalvanic cell 462 is passed through varactor device 464 connected between interlink elements 431, 432. Thus, a value of capacitance between interlink elements 431, 432 changes when an electrical current is passed through the varactor.

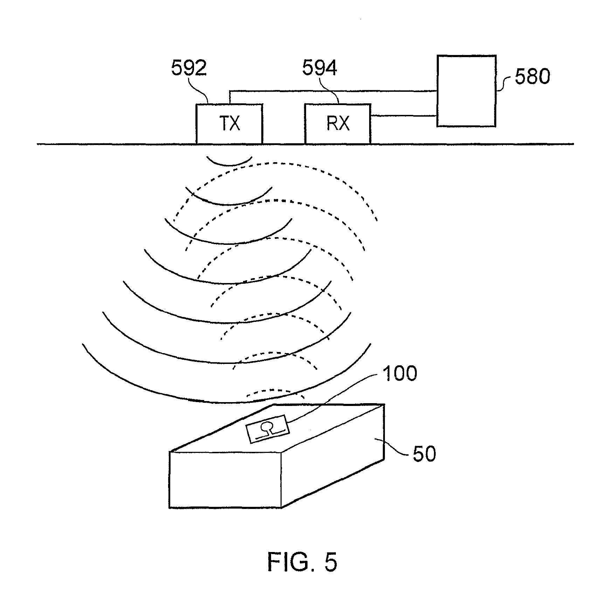

Some embodiments of the invention also provide interrogation apparatus 580 (FIG. 5) arranged to interrogate sensor members 100, 200, 300, 400 according to some embodiments of the invention. In the embodiment of FIG. 5 the interrogation apparatus 580 is provided with a radio frequency (RF) transmitter element 592 and a corresponding receiver element 594.

The interrogation apparatus 580 is configured to transmit a radio frequency (RF) signal by means of the transmitter element 592 and to detect by means of the receiver element 594 a corresponding RF signal reflected by a sensor member located in a path of the transmitted RF signal.

In some embodiments of the invention the interrogation apparatus 580 is arranged to transmit a substantially single frequency RF signal at a given moment in time, and to change the frequency of the signal transmitted by the transmitter element 592 as a function of time. This feature allows the apparatus 580 to distinguish between sensor members having different respective resonant frequencies.

In some embodiments the interrogation apparatus 580 is arranged to vary the RF signal in discrete steps, the RF signal being maintained substantially constant at a given frequency for a period of time sufficient to allow reliable detection of a sensor member of a given resonant frequency.

In some embodiments the interrogation apparatus 580 is arranged to transmit a chirped RF signal. Other forms of RF signal are also useful. In some embodiments the interrogation apparatus 580 is arranged to transmit an RF signal comprising a plurality of frequencies and to detect reflected radiation of frequencies corresponding to those expected of sensors deployed in a given area.

In some embodiments of the invention a sensor has a sensor member provided in combination with a reference resonant radar reflector member. In some embodiments the sensor is provided whereby the reference member is arranged such that exposure of the sensor to a target measurand does not result in exposure of the reference member to the target measurand.

In some embodiments a resonant frequency of the reference member is arranged to be substantially the same as that of the sensor member when the sensor member is not exposed to the target measurand. Interrogation apparatus 580 irradiating the reference and sensor reflector members would therefore be expected to detect substantially a single reflected frequency of RF radiation.

However, upon exposure of the sensor to a target measurand the resonant frequency of the sensor member is arranged to change relative to that of the reference member sufficiently to allow interrogation apparatus 580 to detect a difference between resonant frequencies of the sensor member and reference member.

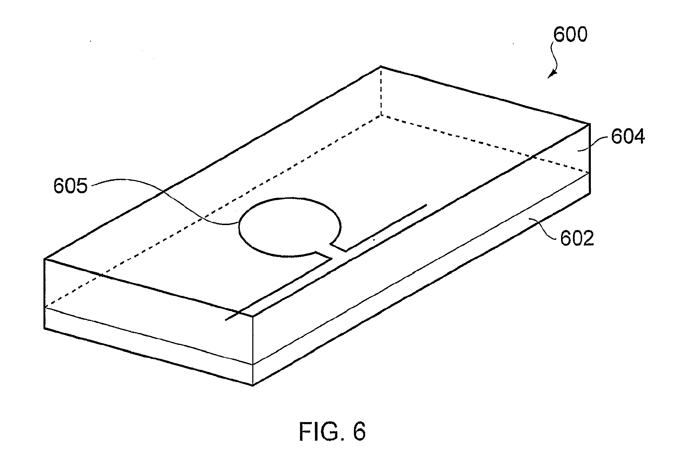

FIG. 6 shows a reference reflector member 600 according to an embodiment of the invention. The reference member 600 is similar to the sensor member 100, having a substrate 602 on which a conducting portion 605 is provided. In addition, a protective shield 604 formed from a plastics material is provided over the substrate 602 to protect the conducting portion 605 from exposure to the target measurand. In the example of FIG. 6 the target measurand may be water, or any other liquid having a dielectric constant sufficiently different from air to enable detection by a sensor member of a change in dielectric constant of a medium (e.g. a gas or liquid) overlying or impinging upon the conducting portion 105 of the embodiment of FIG. 1.

In some embodiments the reference member is arranged to have a different resonant frequency from the sensor member such that RF radiation reflected by the respective members have respective frequencies that are distinguishable from one another by interrogation apparatus 580.

Thus, it is to be understood that the presence of a reference member allows detection of a target measurand by detecting relative changes in resonant frequency of a sensor member with respect to the reference member, rather than requiring an absolute change in resonant frequency of one or more sensor members to be detected. In some embodiments this has the advantage of enabling smaller changes in resonant frequency to be detected, thereby increasing a sensitivity of a detection system to the presence of a target measurand.

A further advantage of the presence of a reference member is that in some embodiments changes in an environment that result in a change in the resonant frequency of a sensor member but which are not due to the presence of the target measurand (such as temperature) can be compensated for. This is because the reference member may be arranged to experience a similar change in resonant frequency to the sensor member due to such effects. In some embodiments, the reference member and sensor member are arranged such that they experience similar environmental conditions such as temperature, atmospheric pressure, etc.

In some embodiments the conductive portion 105 of the sensor is provided in juxtaposition with a conductive body, the conductive portion 105 being insulated from the conductive body. In some embodiments the conductive body is a ground plane of a substrate on which the conductive portion i 05 is formed. In some embodiments the conductive body is a utility pipeline or oil pipeline.

In some embodiments the conductive portion 105 is arranged such that the conductive body acts as an RF 'pick-up'. This feature has the advantage that an amplitude of an RF signal transmitted by the sensor member back to the interrogation apparatus 580 is increased by the presence of the conductive body.

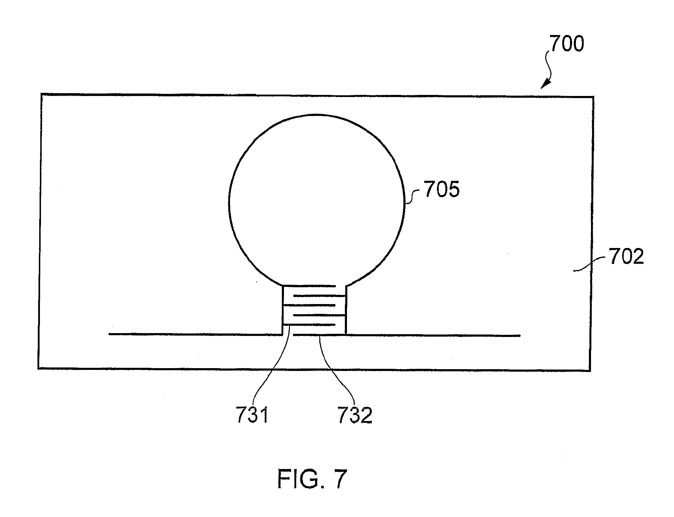

FIG. 7 shows an embodiment of the invention in which a sensor member 700 is provided with interdigitated interlink elements 731, 732. Interdigitated interlink elements 731, 732 have the advantage that a sensitivity of the sensor member 700 to the presence of a target measurand can be increased. In other words, a sensor member 700 having interdigitated interlink elements 731, 732 can detect a smaller amount of target measurand than a corresponding sensor member not having interdigitated interlink elements 731, 732 (e.g. that of the embodiment of FIG. 1).

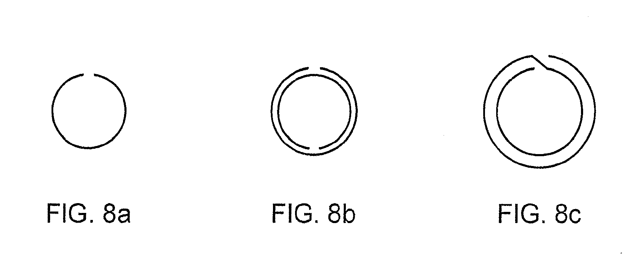

FIG. 8 shows alternative forms of the conductive portion of a sensor member according to embodiments of the invention. FIG. 8(a) shows a conductive portion in the form of a single split ring resonator (SRR), FIG. 8(b) shows a conductive portion in the form of a double split ring resonator and FIG. 8(c) shows a conductive portion in the form of a spiral ring resonator. It is to be understood that, whilst an amount of capacitance of sensor members according to some embodiments of the invention may be lower than that of other embodiments, in some embodiments the amount of capacitance is still sufficient to provide a measurable change in resonant frequency of a sensor member in the presence of a given target measurand.

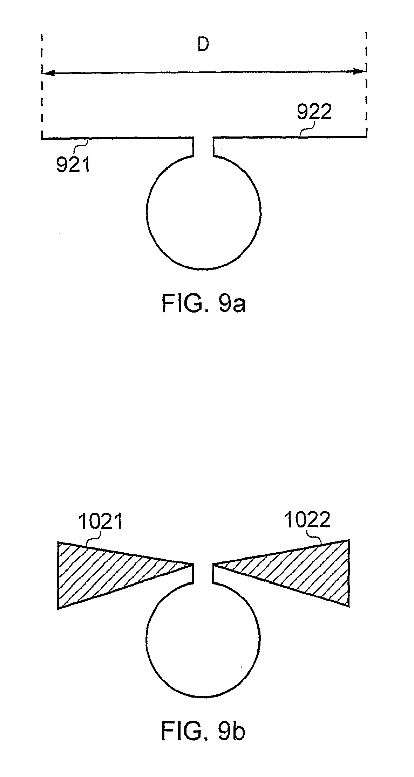

FIG. 9 shows embodiments in which a radiation efficiency of a sensor member having a loop portion in the form of a split ring resonator according to the embodiment of FIG. 8(a) has been increased by providing elongate dipole portions. In the embodiment of FIG. 9(a) the dipole portions are in the form of linear conducting track elements 921, 922. In the embodiment of FIG. 9(b) the dipole portions are in the form of generally triangular or 'tapered' conducting patches 1021, 1022 arranged in a 'bowtie' configuration.

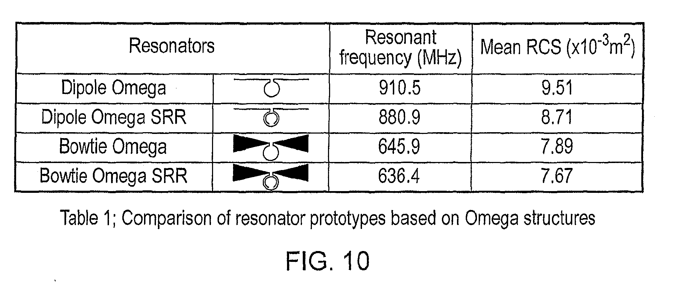

In some embodiments of the invention, reflector members of different configurations are used. FIG. 10 shows reflector members according to some embodiments of the invention together with a corresponding resonant frequency. Values of mean radar cross-section (RCS) of the reflector members are also listed.

The first resonator, a 'dipole omega' resonator is substantially as shown in FIG. 9(a). The second resonator, a 'dipole omega' split ring resonator (SRR) has a portion as shown in FIG. 9(b), i.e. a second split ring is provided within the ring portion of the dipole omega resonator of FIG. 9(a).

The third resonator, a 'bowtie omega' resonator is similar to the first resonator except that the dipole portions are tapered elements symmetrically arranged about the ring portion in a 'bowtie' configuration.

The fourth resonator, a 'bowtie omega SRR' resonator is similar to the second resonator except that the dipole portions are tapered elements symmetrically arranged about the ring portion in a 'bowtie' configuration, as in the case of the third resonator.

A simple empirical formula indicates that by adjusting the length D of the structure (FIG. 9(a)), the resonant frequency f of the structure can be adjusted:

$$ f = k\, c\, /\, (2\, D\, \varepsilon_r^{1/2}) $$

where k is the tuning coefficient, c is the speed of light in vacuum, D is the overall length of the structure, and $\varepsilon_r$ is the dielectric constant of the soil.

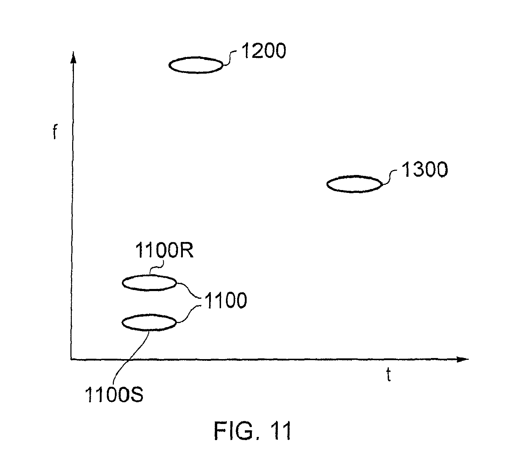

In some embodiments of the invention, data obtained by interrogation apparatus 580 may be plotted in the form of the graph of FIG. 11. FIG. 11 shows a plot of detected radiation intensity (axis normal to the page) as a function of frequency f of the detected radiation and an amount of time delay t between transmission of radiation of a given frequency toward a sensor member and detection of reflected radiation.

Regions 1100 of the graph of FIG. 11 correspond to RF radiation reflected by a sensor 1100 having a reference member and a sensor member. Sensor 1100 is configured whereby a resonant frequency of the sensor member is arranged to be substantially the same as a resonant frequency of the reference member prior to exposure of the sensor member to a target measurand.

In the graph of FIG. 11 a first region 1100S corresponds to radiation reflected by the sensor member of sensor 1100 whilst a second region 1100R corresponds to radiation reflected by the reference member of sensor 1100. The regions 1100S, 1100R correspond to different frequencies, indicating that the sensor member of sensor 1100 has been exposed to a target measurand.

Regions 1200 and 1300 of the graph of FIG. 11 correspond to radiation reflected by sensors 1200, 1300 respectively. Sensors 1200, 1300 are similar in structure to sensor member 1100 except that a resonant frequency of oscillation of the sensor and reference members of sensors 1200 and 1300 are different from one another and from that of sensor 1100.

RF signals reflected by sensors 1200 and 1300 appear to have a reflected intensity corresponding to a single resonant member suggesting that contributions from respective sensor and reference members of the respective sensors 1200, 1300 are superimposed on one another. Thus it may be determined that the sensor members of respective sensors 1200, 1300 have not yet been exposed to a target measurand.

The graph indicates that a time required for signals from sensor 1200 to be detected by the interrogation apparatus is longer than that required for signals from sensor 1100 to be detected, indicating that sensor 1200 is located a greater distance from the interrogation apparatus than sensor 1100. Similarly, sensor 1300 appears to be located a greater distance from the interrogation apparatus than sensors 1100 and 1200.

Some embodiments of the invention are useful for sensing an environment of assets buried underground such as utility pipes and other assets. Some embodiments are useful for sensing an underwater environment.

Some embodiments are useful for sensing an environment on the earth's surface, for example objects at remote locations having line of sight visibility with interrogation apparatus. In some embodiments sensing equipment is provided for monitoring weather such as moisture, windspeed and atmospheric pressure. For example, in some embodiments of the invention the varactor 464 of the embodiment of FIG. 4 is coupled to a generator powered by a wind turbine whereby a capacitance of varactor 464 is dependent upon a speed of wind passing the turbine.

In some embodiments a photovoltaic cell is coupled to a varactor to measure an amount of sunlight incident upon the photovoltaic cell.

Other sensor configurations are also useful.

In some embodiments, sensors are arranged to be detected by aircraft equipped with interrogation apparatus flying over the sensor.

In some embodiments a plurality of sensors are provided in an environment such as a factory, laboratory or public building and irradiated with RF radiation. RF radiation 'mirrors' may be provided to ensure that sensors not in a line of sight position with respect to an RF transmitter element of interrogation apparatus can be excited by RF radiation transmitted by the transmitter element. An RF detector element can be similarly located whereby signals generated (reflected) by sensors excited by RF radiation can be detected by a receiver element of the interrogation apparatus.

In some embodiments of the invention sensors have reflector members arranged whereby the sensor is responsive to RF radiation substantially independently of an axis of polarisation of the radiation.

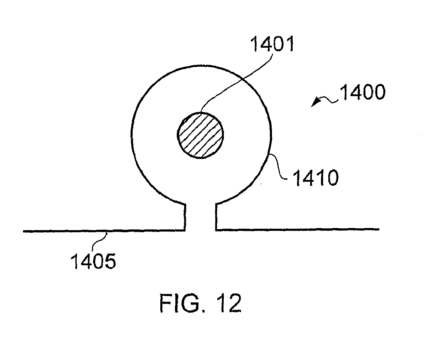

FIG. 12 shows a sensor member 1400 according to an embodiment of the invention arranged to sense a magnetic field due to (say) a current flowing in an electrical cable.

The sensor member 1400 is provided with a ferromagnetic element 1401 within a loop portion 1410 of the conducting portion 1405 of the sensor member. The presence of the ferromagnetic element 1401 modifies an inductance L of the sensor member 1400 and increases a sensitivity of the sensor member 1400 to magnetic fields. In other words, an amount of a change in resonant frequency of the sensor member 1400 in the presence of an external magnetic field is increased.

In use, the sensor member is arranged to be exposed to the magnetic field to be detected and a resonant frequency of the sensor member is measured by exposing the sensor member to RF radiation and detecting radiation reflected by the sensor member as described above. A change in resonant frequency of the sensor member 1400 due to the presence (or subsequent absence) of a magnetic field can be measured.

In some embodiments of the invention in which a value of a measurand changes with time (such as an AC magnetic field) side-bands associated with modulation of the RF signal due to periodic variations in the target measurand may be detected.

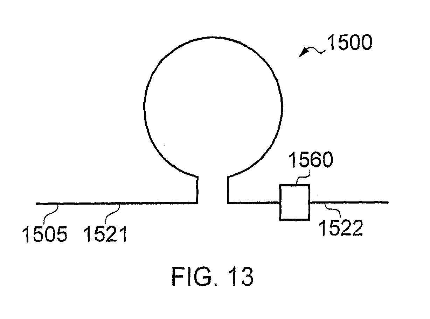

A further embodiment of the invention is shown in FIG. 13 in which a sensor member 1500 is provided substantially as described with respect to other embodiments of the invention including that if FIG. 1 except that a sensor element 1560 is coupled to a one or both dipole elements 1521, 1522 of the sensor member 1500. In the embodiment of FIG. 13 the sensor element 1560 is coupled to dipole element 1522 at a midpoint of the element 1522.

In some embodiments the sensor element 1560 has a Hall effect element configured whereby an electrical conductivity of the sensor element 1560 is dependent upon a magnitude of a magnetic field to which the sensor element 1560 is exposed. Thus, an electrical conductivity of conducting portion 1505 of the sensor member 1500 is dependent upon the magnitude of this magnetic field. A resonant frequency of the sensor member is therefore dependent in turn on the magnitude of this field.

In some embodiments of the invention a giant magnetoresistance (GMR) element is provided instead of or in addition to the Hall element.

In some embodiments of the invention, a sensor member is provided that is configured to measure electric fields. In some embodiments, a sensor member having a conducting portion according to an embodiment of the invention such as that of FIG. 1, 3 and/or 7 is provided with a portion of a non-linear dielectric material such as a ferroelectric material in juxtaposition with the conducting portion. Suitable materials include lithium niobate and other ferroelectric materials.

The presence of the non-linear dielectric material has the effect that a permittivity of the dielectric material changes as a function of the magnitude of an electric field to which the material is exposed. Thus, a capacitance (and therefore the resonant frequency) of the conducting portion of the sensor will be dependent on the magnitude of the electric field to which the sensor member is exposed, allowing variations in the magnitude of the electric field to be detected.

In some embodiments the non-linear dielectric material is provided in juxtaposition with interlink elements of the conducting portion of the sensor member.

In some embodiments of the invention a hygroscopic material is provided in juxtaposition with the conductive portion of the sensor member. The hygroscopic material is arranged whereby exposure of the hygroscopic material to water results in a change in a physical property of the hygroscopic material (e.g. dielectric constant, conductivity) resulting in a change in resonant frequency of the sensor member. Thus, some embodiments of the invention provide means for detecting the presence of moisture.

In some embodiments of the invention, moisture may be removed from the hygroscopic material once exposure to moisture has taken place. In some embodiments, the presence of moisture results in an irreversible change in a form of the hygroscopic material. Thus, in some embodiments a 'one-shot' moisture detector is provided. In some embodiments, a reversible moisture detector is provided.

In some embodiments a sensor is arranged to provide an identification of itself when irradiated with RF radiation. For example, a reference reflector member of the sensor (as described above) may be arranged to resonate at a prescribed frequency characteristic of the type of the sensor.

In some embodiments sensors arranged to detect a particular target measurand may be arranged to resonate at a prescribed frequency. Alternatively or in addition a sensor arranged to detect a particular target measurand may be provided with a further one or more reflector members. The one or more further reflector members may be arranged to resonate at a prescribed frequency, the number of reflector elements providing a means for identifying the type of sensor. Alternatively or in addition a resonant frequency of the further reflector member may provide the means for identifying the type of sensor. The one or more further reflector members may be arranged to resonate at the same or a different frequency to that of the sensor reflector member. In some embodiments where a plurality of further reflector members are provided one or more of the further reflector members may be arranged to resonate at a different respective frequency to one or more other of the further reflector members.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

**Claims**

1. A sensor comprising:

    a sensor resonant radar reflector member; and a sensor element,
    the sensor reflector member being configured to resonate at a resonant frequency when irradiated by radio frequency radiation of a corresponding frequency, the sensor being further configured whereby exposure of the sensor element to a target measurand causes a change in the resonant frequency of the sensor reflector member;
    the sensor further comprising one or more reference reflector members in addition to said sensor reflector member.

2. A sensor as claimed in claim 1 wherein the reference reflector member is configured whereby exposure of the sensor to a target measurand does not cause a change in a resonant frequency of the reference reflector member.

3. A sensor as claimed in claim 1 wherein the reference reflector member is configured whereby exposure of the sensor to a target measurand causes a change in a resonant frequency of the reference reflector member.

4. A sensor as claimed in any one of claims 1 to 3 wherein the one or more reference reflector members provide a means for identifying the type of sensor element.

5. A sensor as claimed in any one of claims 1 to 4 wherein the sensor reflector member and the reference reflector member are arranged to resonate at substantially the same frequency prior to exposure of the sensor reflector member to the target measurand; or wherein the sensor reflector member and the reference reflector member are arranged to resonate at different respective frequencies prior to exposure of the sensor member to the target measurand.

6. A sensor as claimed in any one of claims 1 to 5 wherein the reference reflector member and the sensor reflector member are arranged whereby corresponding axes of electric polarisation of the reference reflector member and sensor reflector member are substantially parallel to one another and/or corresponding axes of magnetic polarisation of the reference reflector member and sensor reflector member are substantially parallel to one another.

7. A sensor as claimed in any one of claims 1 to 5 wherein the reference reflector member and the sensor reflector member are arranged whereby corresponding axes of electric polarisation of the reference reflector member and sensor reflector member are substantially orthogonal to one another and/or corresponding axes of magnetic polarisation of the reference reflector member and sensor reflector member are substantially orthogonal to one another.

8. A sensor as claimed in any one of claims 1 to 5 wherein the reference reflector member and the sensor reflector member are arranged whereby corresponding axes of electric polarisation of the reference reflector member and sensor reflector member are substantially parallel to one another and corresponding axes of magnetic polarisation of the reference reflector member and sensor reflector member are substantially orthogonal to one another or corresponding axes of electric polarisation of the reference reflector member and sensor reflector member are substantially orthogonal to one another and corresponding axes of magnetic polarisation of the reference reflector member and sensor reflector member are substantially parallel to one another.

9. A sensor as claimed in any preceding claim wherein the sensor element comprises a capacitive inductive or resistive element coupled to the sensor reflector member, the sensor being configured whereby a value of a capacitance of the capacitive element, an inductance of the inductive element or a resistance of the resistive element, respectively, is changed when the sensor is exposed to the target measurand.

10. A sensor as claimed in any preceding claim wherein the sensor element comprises a sensor material configured whereby a value of a physical, chemical or electrical property of the sensor material is changed from a first value to a second value upon exposure of the sensor to the target measured thereby to change the resonant frequency of the sensor reflector member; optionally

the sensor material comprises at least one selected from amongst a metallic material, a dielectric material, a non-linear dielectric material, a ferromagnetic material, a hygroscopic material, a silica gel, a salt, NaCl, a chemically sensitive resin with variable dielectric and conductive properties, a ferroelectric material, lithium niobate, an yttrium-iron-garnet (YIG) and a chemically triggered conducting polymer; optionally wherein said physical, chemical or electrical property is at least one selected from amongst an electric permittivity, a magnetic permeability, an electrical conductivity, a capacitance and an inductance.

11. A sensor as claimed in any preceding claim wherein the sensor element comprises a transducer element configured to generate an electrical current in response to exposure of the sensor element to the target measurand; optionally the transducer element comprises at least one selected from amongst an electrogalvanic cell, a photodetector and an ionizing radiation detector.

12. A sensor as claimed in any preceding wherein the sensor member has a portion responsive to an electric field applied parallel to an electric polarisation axis of the sensor member and a portion responsive to a magnetic field applied parallel to a magnetic polarisation axis of the sensor member.

13. A sensor as claimed in claim 12 wherein the portion responsive to an electric field comprises a dipole portion and/or
wherein the portion responsive to a magnetic field comprises a loop portion.

14. A method of detecting the presence of a target measurand comprising:

providing a sensor comprising: a sensor resonant radar reflector member;
a sensor element, the sensor reflector member being configured to resonate at a resonant frequency when irradiated by radio frequency radiation of a corresponding frequency, the sensor being further configured whereby exposure of the sensor element to a target measurand causes a change in the resonant frequency of the sensor reflector member; and
one or more reference resonant radar reflector members in addition to said sensor reflector member;
irradiating the sensor with RF radiation including radiation of a frequency corresponding to the resonant frequency of the sensor member; and detecting radiation reflected by the sensor.

15. A method as claimed in claim 14 wherein the reference reflector member is configured whereby exposure of the sensor to a target measurand does not cause a change in a resonant frequency of the reference reflector member,
the method comprising the step of measuring a difference between a resonant frequency of the sensor reflector member and a resonant frequency of the reference reflector member thereby to detect a change in resonant frequency of the sensor reflector member in the presence of a target measurand.

FIG. 1

X——————————X

200

205

222

202

231    250    203    232

220

FIG. 2

FIG. 3

FIG. 4

FIG. 5

FIG. 6

FIG. 7

FIG. 8a

FIG. 8b

FIG. 8c

D

922

921

FIG. 9a

1021

1022

FIG. 9b

| Resonators | | Resonant frequency (MHz) | Mean RCS $(x10^{-3}m^2)$ |
|---|---|---|---|
| Dipole Omega | | 910.5 | 9.51 |
| Dipole Omega SRR | | 880.9 | 8.71 |
| Bowtie Omega | | 645.9 | 7.89 |
| Bowtie Omega SRR | | 636.4 | 7.67 |

Table 1; Comparison of resonator prototypes based on Omega structures

FIG. 10

FIG. 11

FIG. 12

FIG. 13